# EUROPEAN PATENT APPLICATION

(11) **EP 4 382 974 A1**
(43) Date of publication of application: **12.06.2024**
(21) Application number: 23855751.6
(22) Date of filing: 15.08.2023
(51) Int. Cl.: G02B 6/12, G02B 6/14

(54) **SPOT-SIZE CONVERSION STRUCTURE AND PHOTONIC DEVICE**

(30) Priority: 19.10.2022 CN 202211281928
(71) Applicant: Suzhou Lycore Technologies Co., Ltd., Suzhou, Jiangsu 215123 (CN)
(72) Inventor: LIANG, Hanxiao, Suzhou, Jiangsu 215123 (CN); SONG, Yipin, Suzhou, Jiangsu 215123 (CN); ZHOU, Yingcong, Suzhou, Jiangsu 215123 (CN); WU, Haicang, Suzhou, Jiangsu 215123 (CN); MAO, Wenhao, Suzhou, Jiangsu 215123 (CN); SONG, Shiwei, Suzhou, Jiangsu 215123 (CN); SUN, Weiqi, Suzhou, Jiangsu 215123 (CN); YU, Qingyang, Suzhou, Jiangsu 215123 (CN); ZHANG, Zhouyu, Suzhou, Jiangsu 215123 (CN)
(74) Representative: Nevett, Duncan
(86) International application number: PCT/CN2023/113149
(87) International publication number: WO 2024/082794

(57) **Abstract**

Provided are a spot-size converter structure and a photonic device. The spot-size converter structure comprises: a first end face configured to be coupled to an integrated optical waveguide, and a second end face parallel to the first end face configured to be coupled to an optical fiber and. The spot-size converter structure comprises: a substrate; an isolation layer located on one side of the substrate, the isolation layer comprising a first etched portion, a second etched portion and a first transmission portion which extend to the second end face in a longitudinal direction, wherein the first transmission portion is located between the first etched portion and the second etched portion, and the longitudinal direction is orthogonal to the second end face; a waveguide layer located on one side of the isolation layer away from the substrate, the width of the waveguide layer decreasing in a gradient manner in a direction approaching the second end face, wherein the width direction is orthogonal to the longitudinal direction and parallel to a bottom face of the substrate; and a covering layer located on one side of the waveguide layer away from the substrate and covering the waveguide layer, the covering layer comprising a second transmission portion extending to the second end face in the longitudinal direction and protruding in the form of a ridge on a surface of the first transmission portion.

## Description

### TECHNICAL FIELD

The present disclosure relates to the technical field of photons, and in particular, to a spot-size converter structure and a photonic device.

### BACKGROUND ART

An optical waveguide is a dielectric apparatus that guides the propagation of light waves therein, and is also referred to as a dielectric optical waveguide. There are mainly two types of optical waveguides: one type of integrated optical waveguides, comprising a planar dielectric optical waveguide and a slab dielectric optical waveguide, which generally serve as a part of an optoelectronic integrated device, so they are referred to as integrated optical waveguides; and the other type of cylindrical optical waveguides, which are usually referred to as optical fibers.

Technologies of coupling the integrated optical waveguide to the optical fiber have very wide and important applications in the fields of optical communications, microwave photonics, laser beam deflection, wavefront modulation, etc. Edge coupling is a common way used to couple the integrated optical waveguide to the optical fiber.

However, how to improve the coupling efficiency between the integrated optical waveguide and the optical fiber has always been an important issue under research due to the great differences in spot size between the integrated optical waveguide and the optical fiber.

### SUMMARY OF THE INVENTION

According to one aspect of the present disclosure, a spot-size converter structure is provided. The spot-size converter structure is provided with a first end face configured to be coupled to an integrated optical waveguide and a second end face parallel to the first end face configured to be coupled to an optical fiber, the spot-size converter structure comprising: a substrate; an isolation layer located on one side of the substrate, the isolation layer comprising a first etched portion, a second etched portion and a first transmission portion which extend to the second end face in a longitudinal direction, wherein the first transmission portion is located between the first etched portion and the second etched portion, and the longitudinal direction is orthogonal to the second end face; a waveguide layer located on one side of the isolation layer away from the substrate, the width of the waveguide layer decreasing in a gradient manner in a direction approaching the second end face, wherein the width direction is orthogonal to the longitudinal direction and parallel to a bottom face of the substrate; and a covering layer located on one side of the waveguide layer away from the substrate and covering the waveguide layer, the covering layer comprising a second transmission portion extending to the second end face in the longitudinal direction and protruding in the form of a ridge on a surface of the first transmission portion.

In some aspects, the first etched portion and the second etched portion are each an etched blind groove having an etched depth less than the thickness of the isolation layer and extending to the second end face.

In some aspects, the first etched portion and the second etched portion are each an etched through groove having an etched depth equal to the thickness of the isolation layer and extending to the second end face.

In some aspects, the substrate is provided with an etched recess, and the etched through grooves are in communication with the etched recess.

In some aspects, the first etched portion and the second etched portion each comprise a plurality of etched through holes arranged in the longitudinal direction, wherein the etched through holes closest to the second end face are open holes and have openings facing the second end face.

In some aspects, the substrate is provided with an etched recess, and the plurality of etched through holes are in communication with the etched recess.

In some aspects, the width of the first transmission portion is constant, and the width of the second transmission portion is constant.

In some aspects, the width of the first transmission portion decreases gradually in direction approaching the second end face, and the width of the second transmission portion decreases gradually in the direction approaching second end face.

In some aspects, the second transmission portion is centered relative to two side faces of the first transmission portion.

In some aspects, the width of the covering layer decreases in a gradient manner in the direction approaching the second end face.

In some aspects, the waveguide layer comprises a flat plate layer and a ridge layer located on one side of the flat plate layer away from the substrate.

In some aspects, the waveguide layer extends to the second end face.

In some aspects, there is a spacing between a narrow end of the waveguide layer close to the second end face and the second end face.

According to one aspect of the present disclosure, a photonic device is provided, comprising a spot-size converter structure according to any one of the foregoing aspects.

These and other aspects of the present disclosure will be clear from the aspects described below, and will be clarified with reference to the aspects described below.

### BRIEF DESCRIPTION OF THE DRAWINGS

More details, features, and advantages of the present disclosure are disclosed in the following description of exemplary aspects with reference to the accompany drawings, in which:
FIG. 1 is a schematic structural perspective view of a spot-size converter structure according to some exemplary aspects of the present disclosure;
FIG. 2 is a schematic structural top view of a waveguide layer of a spot-size converter structure according to some exemplary aspects of the present disclosure;
FIG. 3 is a diagram of the simulated comparison between a spot size formed at a second end face of a spot-size converter structure according to some exemplary aspects of the present disclosure and a spot size formed at an optical output side end face of a spot-size converter structure of the related art;
FIG. 4 is a schematic structural perspective view of a spot-size converter structure according to some exemplary aspects of the present disclosure;
FIG. 5 is a schematic structural perspective view of a spot-size converter structure according to some exemplary aspects of the present disclosure;
FIG. 6 is a schematic structural perspective view of a spot-size converter structure according to some exemplary aspects of the present disclosure;
FIG. 7 is a schematic structural perspective view of a spot-size converter structure according to some exemplary aspects of the present disclosure; and
FIG. 8 is a structural block diagram of a photonic device according to some exemplary aspects of the present disclosure.

### DETAILED DESCRIPTION OF EMBODIMENTS

Only some exemplary aspects are briefly described below. As can be appreciated by those skilled in the art, the described aspects can be modified in various ways without departing from the spirit or scope of the present disclosure. Accordingly, the accompanying drawings and the description are considered as illustrative in nature, and not as restrictive.

Although the existing spot-size converters can functionally realize the coupling between an integrated optical waveguide and an optical fiber, the coupling efficiency between the integrated optical waveguide and the optical fiber is not high because of the large difference in spot size therebetween, resulting in a high loss of light energy. For example, the spot size of the integrated optical waveguide is generally of the order of hundreds of nanometers, while the spot size of the optical fiber, such as a flat-ended optical fiber, is of the order of tens of microns. Loss of light energy may lead to severe heating of a coupling end face, thereby affecting the reliability and service life of a device. It can be understood that the coupling efficiency is a ratio of optical power emitted by the integrated optical waveguide to optical power received by the optical fiber, or a ratio of optical power emitted by the optical fiber to optical power received by the integrated optical waveguide.

Aspects of the present disclosure provide a spot-size converter structure and a photonic device to improve the coupling efficiency between the integrated optical waveguide and the optical fiber and reduce the optical loss during spot-size conversion.

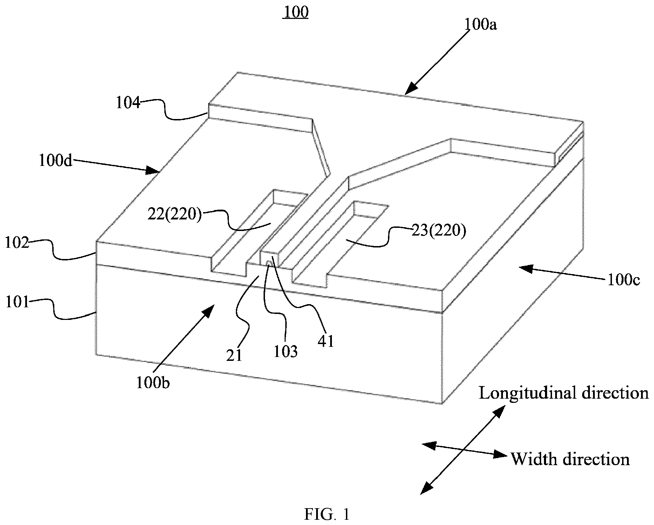

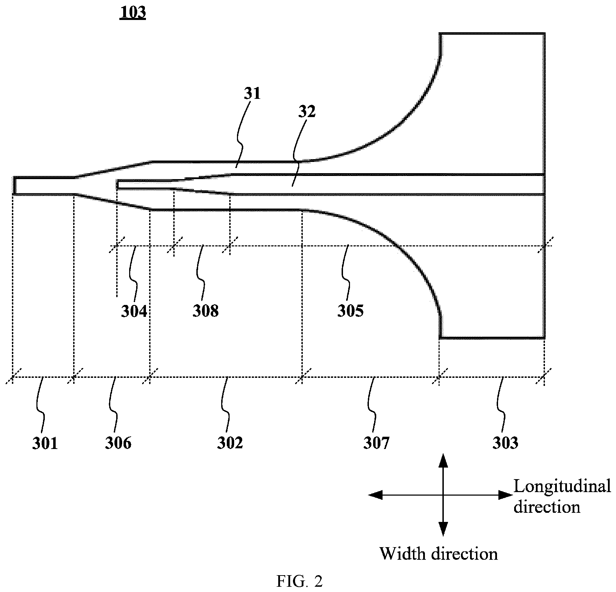

As shown in FIG. 1, a spot-size converter structure 100 provided in some aspects of the present disclosure is provided with a first end face 100a configured to be coupled with an integrated optical waveguide (not shown) and a second end face 100b configured to be coupled with an optical fiber (not shown) and parallel to the first end face 100a. The spot-size converter structure 100 comprises a substrate 101, an isolation layer 102, a waveguide layer 103 and a covering layer 104 that are arranged in sequence. The isolation layer 102 is located on one side of the substrate 101, and comprises a first etched portion 22, a second etched portion 23 and a first transmission portion 21 that extend to the second end face 100b in a longitudinal direction. The first transmission portion 21 is located between the first etched portion 22 and the second etched portion 23, and the longitudinal direction is orthogonal to the second end face 100b. The waveguide layer 103 (as shown in FIG. 2) is located on one side of the isolation layer 102 away from the substrate 101, and has a width decreasing in a gradient manner in a direction approaching the second end face 100b. As shown in FIG. 1, the width direction is orthogonal to the longitudinal direction and parallel to a bottom face of the substrate 101. The covering layer 104 is located on one side of the waveguide layer 103 away from the substrate 101 and covers the waveguide layer 103, and comprises a second transmission portion 41 extending to the second end face 100b in the longitudinal direction and protruding in the form of a ridge on the surface of the first transmission portion 21.

In the aspects of the present disclosure, the longitudinal direction orthogonal to the first end face 100a (or the second end face 100b) is defined as the main transmission direction of light in the waveguide layer 103, and the width direction is orthogonal to the longitudinal direction and parallel to the bottom face of the substrate 101. In addition to the first end face 100a and the second end face 100b, the spot-size converter structure 100 further comprises a first side face 100c and a second side face 100d that intersect with the first end face 100a and the second end face 100b. In one aspect, the first side face 100c and the second side face 100d are orthogonal to the first end face 100a and the second end face 100b.

It is possible that the first end face 100a of the spot-size converter structure 100 serves as an optical input side end face of the spot-size converter structure 100, and the second end face 100b serves as an optical output side end face of the spot-size converter structure 100. Light enters the spot-size converter structure 100 from a wide end of the waveguide layer 103 on the first end face 100a, and is outputted from ends of the first transmission portion 21 and the second transmission portion 41 on the second end face 100b. It is also possible that the first end face 100a of the spot-size converter structure 100 serves as an optical output side end face of the spot-size converter structure 100, and the second end face 100b serves as an optical input side end face of the spot-size converter structure 100. Light enters the spot-size converter structure 100 from the ends of the first transmission portion 21 and the second transmission portion 41 on the second end face 100b, and is outputted from the wide end of the waveguide layer 103 under the guidance of the waveguide layer 103.

As shown in FIG. 2, the waveguide layer 103 may use a ridge waveguide, comprising a flat plate layer 31 and a ridge layer 32 located on one side of the flat plate layer 31 away from the substrate 101. The ridge waveguide has properties such as low dominant mode cutoff frequency, wide bandwidth, and low impedance. In some aspects of the present disclosure, the refractive index n1 of the waveguide layer 103, the refractive index n2 of the covering layer 104 and the refractive index n3 of the isolation layer 102 satisfy: n1 > n2, and n1 > n3. The refractive index of the isolation layer 102 and the refractive index of the covering layer 104 are less than that of the waveguide layer 103, so that light can be mainly confined to transmitting in the ridge waveguide to better achieve the above advantages of the ridge waveguide.

In the aspects of the present disclosure, the width of the waveguide layer 103 decreases in a gradient manner in the direction approaching the second end face 100b, such that relatively moderate spot-size modulation can be performed on the light transmitted in the waveguide layer 103, thereby minimizing the light transmission loss and improving the coupling efficiency of the spot-size converter structure 100. By "the width decreases in a gradient manner in the direction approaching the second end face 100b", it can be understood that the width of the waveguide layer 103 can be roughly divided into at least two portions according to its change rule thereof, and each portion can use a constant width design or a gradually-changing width design. Furthermore, the closer the portion of the waveguide layer is to the second end face 100b, the smaller average value of the width is thereof.

The specific structural form of the waveguide layer 103 is not limited. As shown in FIG. 2, in some aspects, the flat plate layer 31 of the waveguide layer 103 comprises a first constant-width portion 301, a first gradually-widening portion 306, a second constant-width portion 302, a second gradually-widening portion 307 and a third constant-width portion 303 that are arranged in sequence in the direction away from the second end face 100b; and the ridge layer 32 comprises a fourth constant-width portion 304, a third gradually-widening portion 308 and a fifth constant-width portion 305 that are arranged in sequence in the direction away from the second end face 100b. The width of each of the constant-width portions is constant, and the width of each of the gradually-widening portions increases gradually in a linear or non-linear manner in the direction away from the second end face 100b.

In the aspects, the waveguide layer 103 as a whole extends to the second end face 100b. In some other aspects of the present disclosure, there may also be a spacing between a narrow end of the waveguide layer as a whole close to the second end face and the second end face. In addition, there may also be a spacing between a narrow end of the ridge layer and the narrow end of the waveguide layer.

As shown in FIG. 1, in the aspects of the present disclosure, the width of the covering layer 104 as a whole may also decrease in a gradient manner in the direction approaching the second end face 100b. In this way, more light can be guided into the waveguide layer 103 and the second transmission portion 41, thereby further improving the coupling efficiency of the spot-size converter structure 100.

In the aspects of the present disclosure, the first transmission portion 21 is located between the first etched portion 22 and the second etched portion 23, and the first etched portion 22 and the second etched portion 23 have a blocking effect on the diffusion of an optical mode field in the width direction, so that light can be propagated more centrally in the first transmission portion 21, the second transmission portion 41 and the waveguide layer 103. The second transmission portion 41 protrudes in the form of a ridge on the surface of the first transmission portion 21, that is, the width of the second transmission portion 41 is less than that of the first transmission portion 21, so as to have a sinking modulation effect on the optical mode field, so that it can be sunk more into the isolation layer 102, and the dimensions of the spot size formed at the second end face 100b basically match those of the spot size of the optical fiber, thereby reducing the optical loss during spot-size conversion and improving the coupling efficiency.

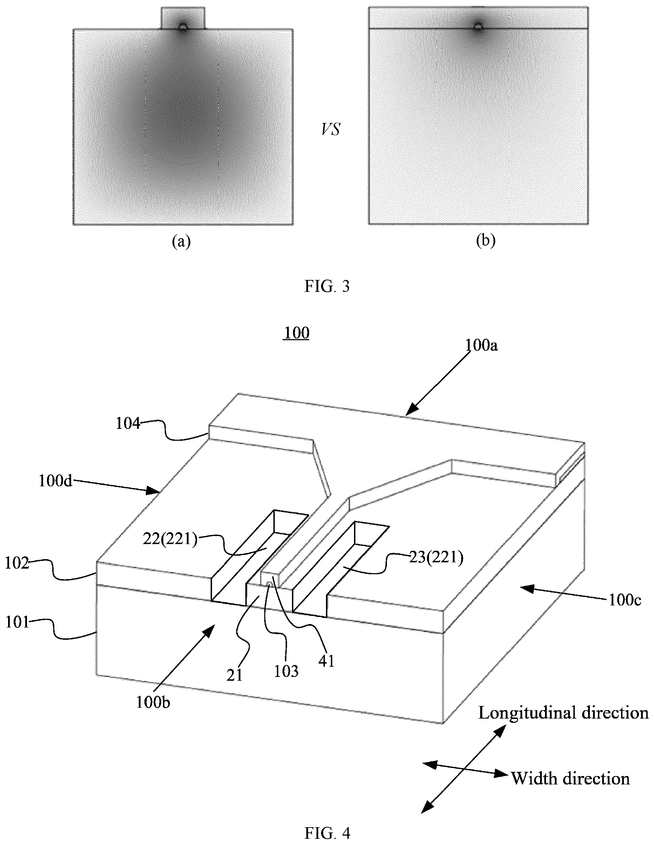

As shown in FIG. 3, which is a diagram of the simulated comparison between the spot size formed at the second end face 100b of the spot-size converter structure 100 according to some aspects of the present disclosure and a spot size formed at an optical output side end face of a spot-size converter structure of the related art. It can be seen that the spot size formed at the second end face 100b of the spot-size converter structure 100 in the aspects of the present disclosure has larger dimensions, so that it can be better coupled to the optical fiber.

In addition, since the spot size formed at the second end face 100b has larger dimensions and can be better coupled to the optical fiber, the dependence on the structural design and the processing accuracy of the waveguide layer 103 can be appropriately reduced, thereby reducing the difficulty of micro-nano-processing (e.g., photolithography, coating, etching, ion implantation, microfluidic control, and masking) and lowering the production cost.

As shown in FIG. 1, in the aspects of the present disclosure, the second transmission portion 41 is centered relative to two side faces of the first transmission portion 21. In this way, as shown in FIG. 3, the spot size obtained is also symmetrical in the left and right direction and is more uniform, and the structural design and the fabrication are simpler. In other aspects of the present disclosure, the second transmission portion may not be centered relative to the two side faces of the first transmission portion. For example, the second transmission portion may be closer to one of the side faces of the first transmission portion, or may be flush with the side face of the first transmission portion on the same side.

In the aspects of the present disclosure, the first etched portion 22 and the second etched portion 23 may be formed by etching at least a portion of the thickness of the isolation layer 102.

As shown in FIG. 1, in some aspects, the first etched portion 22 and the second etched portion 23 are each an etched blind groove 220 having an etched depth less than the thickness of the isolation layer 102 and extending to the second end face 100b.

As shown in FIG. 4, in some other aspects, the first etched portion 22 and the second etched portion 23 are each an etched through groove 221 having an etched depth equal to the thickness of the isolation layer 102 and extending to the second end face 100b.

The etched blind groove 220 or the etched through groove 221 in the above aspects have a blocking effect on the diffusion of the optical mode field in the width direction, so that the light can be propagated more centrally in the first transmission portion 21, the second transmission portion 41 and the waveguide layer 103.

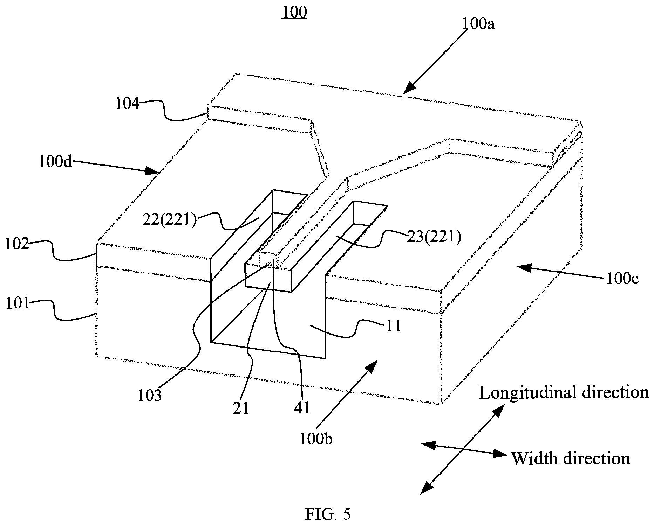

As shown in FIG. 5, in some other aspects, the first etched portion 22 and the second etched portion 23 are each an etched through groove 221 having an etched depth equal to the thickness of the isolation layer 102 and extending to the second end face 100b. The substrate 101 is provided with an etched recess 11, and the etched through grooves 221 are in communication with the etched recess 11.

Since light is mainly transmitted in a medium, designing the etched recess 11 in the substrate 101 has a restricting effect on the light input or output from the second end face 100b, so that the diffusion of light into the substrate 101 can be reduced, thereby reducing the light transmission loss, achieving better coupling to the optical fiber, and further improving the coupling efficiency between the integrated optical waveguide and the optical fiber.

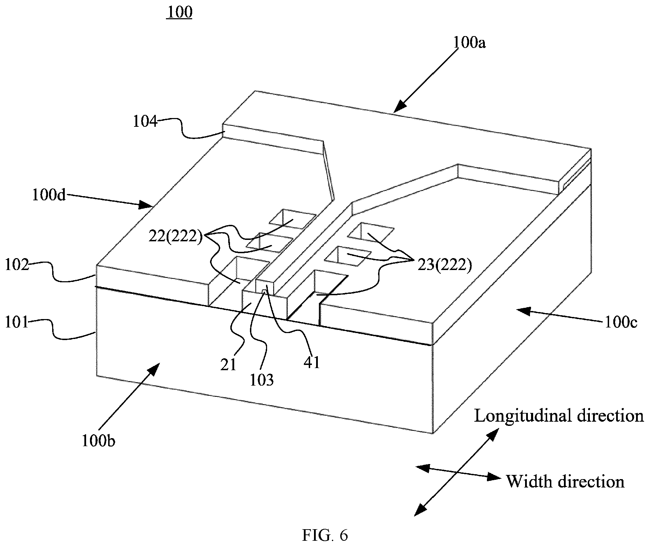

As shown in FIG. 6, in some aspects, the first etched portion 22 and the second etched portion 23 each comprise a plurality of etched through holes 222 arranged in the longitudinal direction. The etched through holes 222 closest to the second end face 100b are open holes and have openings facing the second end face 100b.

The plurality of etched through holes 222 arranged in a discrete manner may also have a blocking effect on the diffusion of the optical mode field in the width direction, so that the light can be propagated more centrally in the first transmission portion 21, the second transmission portion 41 and the waveguide layer 103.

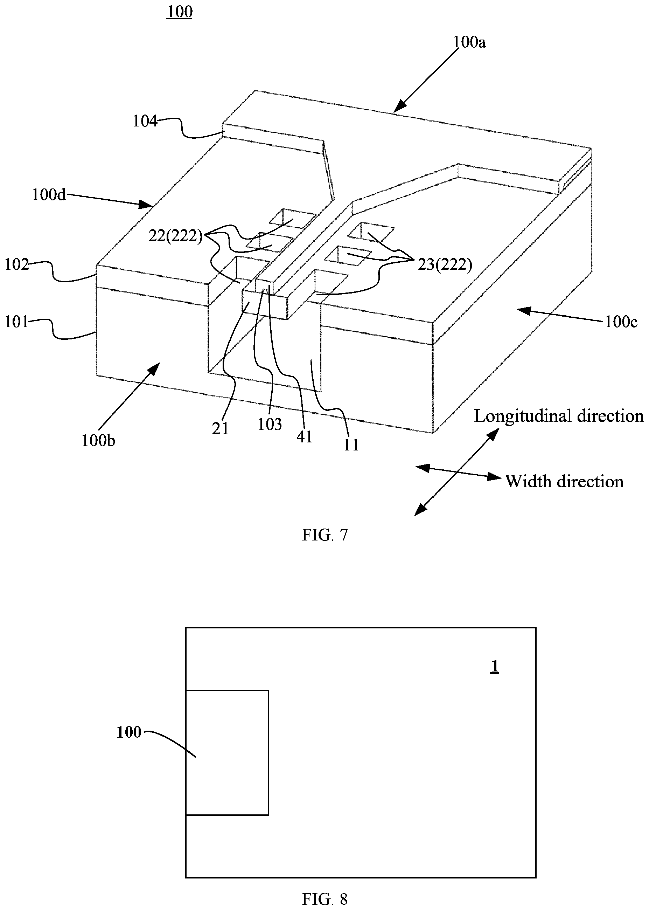

As shown in FIG. 7, in some other aspects, on the basis of the aspect shown in FIG. 6, the substrate 101 is also further designed with the etched recess 11, and the plurality of etched through holes 222 are in communication with the etched recess 11, so that the diffusion of light into the substrate 101 can be reduced, thereby reducing the light transmission loss, and further improving the coupling efficiency between the integrated optical waveguide and the optical fiber.

As shown in FIGS. 1 and 4-7, in the aspects of the present disclosure, the width of the first transmission portion 21 is constant, and the width of the second transmission portion 41 is constant. That is, both the first transmission portion 21 and the second transmission portion 41 have a constant width design. However, the present disclosure is not limited thereto. For example, it is also possible that the width of the first transmission portion decreases gradually in the direction approaching the second end face, and the width of the second transmission portion decreases gradually in the direction approaching the second end face, as long as at the same cross-sectional position, the width of the second transmission portion is less than that of the first transmission portion, which can still have a sinking modulation effect on the optical mode field.

As shown in FIG. 8, an aspect of the present disclosure further provides a photonic device 1, comprising a spot-size converter structure 100 according to any one of the foregoing aspects. The specific product type of the photonic device 1 is not limited, for example, it may be an electro-optical modulator, a splitter, a star coupler, a variable optical attenuator (VOA), an optical switch, a frequency comb, an array waveguide grating (AWG), and the like.

The spot-size converter structure 100 is integrated in the photonic device 1. Since the spot-size converter structure 100 has a higher coupling efficiency, the optical loss of the photonic device 1 is smaller and the performance is improved.

It should be understood that, in this description, the orientations or positional relationships or dimensions denoted by the terms, such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial" and "circumferential", are the orientations or positional relationships or dimensions shown on the basis of the accompanying drawings, and these terms are used merely for ease of description, rather than indicating or implying that the apparatus or element referred to must have particular orientations and be constructed and operated in the particular orientations, and therefore should not be construed as limiting the scope of protection of the present disclosure.

In addition, the terms "first", "second" and "third" are merely for descriptive purposes and should not be construed as indicating or implying relative importance or implicitly indicating the number of technical features indicated. Thus, the features defined with "first", "second" and "third" may explicitly or implicitly comprise one or more features. In the description of the present disclosure, the term "a plurality of means two or more, unless otherwise explicitly and specifically defined.

In the present disclosure, unless expressly stated or defined otherwise, the terms such as "mounting", "connection", "connected" and "fixing" should be interpreted broadly, for example, they may be a fixed connection, a detachable connection, or an integrated connection; may be mechanical connection, or electrical connection, or communication; and may be a direct connection or an indirect connection by means of an intermediate medium, or may be internal communication between two elements or interaction between the two elements. For those of ordinary skill in the art, the specific meanings of the above terms in the present disclosure can be understood according to specific circumstances.

In the present disclosure, unless expressly stated or limited otherwise, the expression of the first feature being "above" or "below" the second feature may comprise the case that the first feature is in direct contact with the second feature, and may also comprise the case that the first feature and the second feature are not in direct contact but are contacted via another feature therebetween. Furthermore, the first feature being "over", "above" or "on" the second feature comprises the case that the first feature is directly or obliquely above the second feature, or merely indicates that the first feature is at a higher level than the second feature. The first feature being "below", "under" or "beneath" the second feature comprises the case that the first feature is directly or obliquely below the second feature, or merely indicates that the first feature is at a lower level than the second feature.

This description provides many different implementations or examples that can be used to implement the present disclosure. It should be understood that these different implementations or examples are purely illustrative and are not intended to limit the scope of protection of the present disclosure in any way. On the basis of the disclosure of the description of the present disclosure, those skilled in the art will be able to conceive of various changes or substitutions. All these changes or substitutions shall fall within the scope of protection of the present disclosure. Therefore, the scope of protection of the present disclosure shall be subject to the scope of protection of the claims.

## Claims

1. A spot-size converter structure, provided with a first end face configured to be coupled to an integrated optical waveguide and a second end face parallel to the first end face configured to be coupled to an optical fiber, the spot-size converter structure comprising:
a substrate;
an isolation layer located on one side of the substrate, the isolation layer comprising a first etched portion, a second etched portion and a first transmission portion which extend to the second end face in a longitudinal direction, wherein the first transmission portion is located between the first etched portion and the second etched portion, and the longitudinal direction is orthogonal to the second end face;
a waveguide layer located on one side of the isolation layer away from the substrate, the width of the waveguide layer decreasing in a gradient manner in a direction approaching the second end face, wherein the width direction is orthogonal to the longitudinal direction and parallel to a bottom face of the substrate; and
a covering layer located on one side of the waveguide layer away from the substrate and covering the waveguide layer, the covering layer comprising a second transmission portion extending to the second end face in the longitudinal direction and protruding in the form of a ridge on a surface of the first transmission portion.

2. The spot-size converter structure according to claim 1, wherein
the first etched portion and the second etched portion are each an etched blind groove having an etched depth less than the thickness of the isolation layer and extending to the second end face.

3. The spot-size converter structure according to claim 1, wherein
the first etched portion and the second etched portion are each an etched through groove having an etched depth equal to the thickness of the isolation layer and extending to the second end face.

4. The spot-size converter structure according to claim 3, wherein
the substrate is provided with an etched recess, and the etched through grooves are in communication with the etched recess.

5. The spot-size converter structure according to claim 1, wherein
the first etched portion and the second etched portion each comprise a plurality of etched through holes arranged in the longitudinal direction, wherein the etched through holes closest to the second end face are open holes and have openings facing the second end face.

6. The spot-size converter structure according to claim 5, wherein
the substrate is provided with an etched recess, and the plurality of etched through holes are in communication with the etched recess.

7. The spot-size converter structure according to claim 1, wherein
the width of the first transmission portion is constant, and the width of the second transmission portion is constant.

8. The spot-size converter structure according to claim 1, wherein
the width of the first transmission portion decreases gradually in the direction approaching the second end face, and the width of the second transmission portion decreases gradually in the direction approaching the second end face.

9. The spot-size converter structure according to claim 1, wherein
the second transmission portion is centered relative to two side faces of the first transmission portion.

10. The spot-size converter structure according to claim 1, wherein
the width of the covering layer decreases in a gradient manner in the direction approaching the second end face.

11. The spot-size converter structure according to claim 1, wherein
the waveguide layer comprises a flat plate layer and a ridge layer located on one side of the flat plate layer away from the substrate.

12. The spot-size converter structure according to any one of claims 1 to 11, wherein
the waveguide layer extends to the second end face.

13. The spot-size converter structure according to any one of claims 1 to 11, wherein
there is a spacing between a narrow end of the waveguide layer close to the second end face and the second end face.

14. A photonic device, comprising a spot-size converter structure according to any one of claims 1 to 13.
